# EUROPEAN PATENT APPLICATION

(11) **EP 4 734 228 A1**
(43) Date of publication of application: **29.04.2026**
(21) Application number: 25207648.4
(22) Date of filing: 09.10.2025
(51) Int. Cl.: H01M 10/613, H01M 10/643, H01M 10/6567, H01M 50/213, H01M 50/291, H01M 10/625, H01M 50/249

(54) **CELL BRACKET AND IMMERSION-TYPE LIQUID-COOLED BATTERY PACK**

(30) Priority: 10.10.2024 CN 202422449359 U; 11.12.2024 WO PCT/CN2024/138339
(71) Applicant: Eve Energy Co., Ltd., Huizhou, Guangdong 516006 (CN)
(72) Inventor: ZHANG, Jun, Huizhou, 516006 (CN)
(74) Representative: HGF

(57) **Abstract**

Provided are a cell bracket and an immersion-type liquid-cooled battery pack. A first surface (4a) of the cell bracket includes a plurality of cell limiting grooves (41) configured to accommodate cells (21) of the battery pack. A protrusion block (42) for supporting a cell (21) is disposed in a respective cell limiting groove (41). In a state where an end surface of the cell (21) abuts against the protrusion block (42), a flow gap (41a) exists between a groove bottom surface of the cell limiting groove (41) and the end surface of the cell (21). The cell bracket further has a second surface (4b) opposite to the first surface (4a). A communication hole (43) penetrating the first surface (4a) and the second surface (4b) is disposed on the cell bracket and is configured to communicate with a liquid hole of a liquid-cooled plate of the battery pack.

## Description

### TECHNICAL FIELD

The present application relates to the field of battery technology, for example, a cell bracket and an immersion-type liquid-cooled battery pack.

### BACKGROUND

A battery pack usually includes a battery box and a battery assembly accommodated in the battery box. The battery assembly is formed by a plurality of cells arranged in a set manner. A cell may be a cylindrical cell, a square-case cell, or a solid-state cell, which may be designed according to the usage scenarios and requirements of the battery pack. Because the outer contour of a cylindrical cell is circular, it is difficult to form a stable and reliable limit and match for a whole battery assembly through the contact and abutting between cylindrical cells. Accordingly, for a battery assembly composed of cylindrical cells, when the battery assembly is loaded into a battery box, it is usually necessary to use a cell bracket to limit the cylindrical cells in the battery assembly to guarantee the stability of the mounting of the battery assembly and improve the safety of the battery pack.

In the related art, a cell bracket has multiple limiting grooves, each of the limiting grooves is matched with a respective cylindrical cell. When a battery assembly is assembled, the cylindrical cells are loaded to corresponding limiting grooves in a one-to-one manner. After the assembly of the battery assembly is completed, the battery assembly is loaded into a battery box.

For an immersion-type liquid-cooled battery pack, due to the arrangement of the cell bracket, it is difficult for coolant to flow into the limiting grooves. In this case, the cooling effect of the part of the cylindrical cells accommodated in the limiting grooves is not good, easily causing a poor temperature consistency of the cylindrical cells and affecting the stability of the battery pack.

### SUMMARY

In a first aspect, the present application provides a cell bracket for an immersion-type liquid-cooled battery pack. A first surface of the cell bracket has a plurality of cell limiting grooves configured to accommodate cells of the immersion-type liquid-cooled battery pack.

A protrusion block for supporting a cell is disposed in a respective cell limiting groove of the plurality of cell limiting grooves. In a state where an end surface of the cell abuts against the protrusion block, a flow gap exists between a groove bottom surface of the respective cell limiting groove and the end surface of the cell.

The cell bracket further includes a second surface opposite to the first surface. A communication hole penetrating the first surface and the second surface is disposed on the cell bracket, and the communication hole is configured to communicate with a liquid hole of a liquid-cooled plate of the immersion-type liquid-cooled battery pack. The communication hole is in fluid communication with the flow gap in a state where the cell is accommodated in the respective cell limiting groove.

In a second aspect, the present application provides an immersion-type liquid-cooled battery pack including a battery assembly, a liquid-cooled plate, and a cell bracket. The cell bracket is disposed between the battery assembly and the liquid-cooled plate. A first surface of the cell bracket faces the battery assembly. A second surface of the cell bracket faces the liquid-cooled plate.

According to the cell bracket provided in the present application, the first surface of the cell bracket includes a plurality of cell limiting grooves configured to accommodate the cells of the battery pack. A protrusion block for supporting a cell is disposed in a respective cell limiting groove. In the state where an end surface of the cell abuts against the protrusion block, a flow gap exists between a groove bottom surface of the cell limiting groove and the end surface of the cell. The cell bracket further includes the second surface opposite to the first surface. The communication hole penetrating the first surface and the second surface is disposed on the cell bracket and is configured to communicate with the liquid hole of the liquid-cooled plate of the battery pack. The communication hole is in fluid communication with the flow gap in the state where the cell is accommodated in the cell limiting groove so as to guarantee that coolant can flow into the cell limiting groove, thereby implementing liquid cooling and heat dissipation of the part of the cell accommodated in the cell limiting groove, guaranteeing the overall temperature consistency of the cells, and improving the stability of the cells.

According to the immersion-type liquid-cooled battery pack provided in the present application, the application of the cell bracket can improve the cooling effect of the cells, guarantee the temperature consistency of the cells, and improve the stability of the battery pack.

### BRIEF DESCRIPTION OF DRAWINGS

FIG. 1 is a structure diagram of a battery pack according to some embodiments of the present application.
FIG. 2 is an exploded view of the battery pack of FIG. 1.
FIG. 3 is a top view of the battery pack with a second liquid-cooled plate removed according to some embodiments of the present application.
FIG. 4 is a section view taken along L-L of FIG. 3.
FIG. 5 is a section view taken along M-M of FIG. 3.
FIG. 6 is a structure diagram showing a cell bracket in one direction according to some embodiments of the present application.
FIG. 7 is a structure diagram showing a cell bracket in the other direction according to some embodiments of the present application.
FIG. 8 is a partial structure view of the cell bracket of FIG. 7.

### Reference list

- 1: battery box
- 12: liquid inlet transition hole
- 12: liquid outlet transition hole
- 2: battery assembly
- 21: cell
- 3: liquid-cooled assembly
- 31: first liquid-cooled plate
- 311: first liquid inlet hole
- 312: first liquid outlet hole
- 32: second liquid-cooled plate
- 321: second liquid inlet hole
- 322: second liquid outlet hole
- 4: cell bracket
- 4a: first surface
- 4b: second surface
- 41: cell limiting groove
- 41a: flow gap
- 42: protrusion block
- 43: communication hole
- 44: boss
- 45: recess
- 46: penetrating groove
- 5: liquid inlet joint
- 6: liquid outlet joint

### DETAILED DESCRIPTION

Before any example of the present application is described in detail, it is to be understood that the present application is not limited to its applications to the structural details and the arrangement of components set forth in the following description or illustrated in the preceding drawings.

In the present application, the term "comprising", "including", "having", or any other variant thereof is intended to encompass a non-exclusive inclusion so that a process, method, article, or apparatus that includes a series of elements not only includes those elements but also includes other elements that are not expressly listed or elements that are inherent to such process, method, article, or apparatus. In the absence of more restrictions, the elements defined by the statement "including a ..." do not exclude the presence of additional identical elements in the process, method, article or apparatus that includes the elements.

In the present application, the term "and/or" is used for describing the association relationship between associated objects, which means that there can be three kinds of relationships. For example, A and/or B can indicate that A exists alone, A and B exist simultaneously, and B exists alone. In addition, the character "/" in the present application generally indicates the "and/or" relationship between the contextual associated objects.

In the present application, the term "connected", "joined", "coupled", or "mounted" may refer to directly connected, joined, coupled, or mounted or indirectly connected, joined, coupled, or mounted. For example, direct connection means that two members or assemblies are connected together without intermediate members, and indirect connection means that two members or assemblies are separately connected to at least one intermediate member and the two members or assemblies are connected to each other through the at least one intermediate member. Additionally, "connected" or "coupled" is not limited to physically or mechanically connected or coupled and may include electrically connected or coupled.

In the present application, it is to be understood by those of ordinary skill in the art that a relative term (for example, "about", "approximately", or "basically") used in conjunction with quantities or conditions is inclusive of the stated value and has the meaning indicated by the context. For example, the relative term includes at least a degree of error associated with the measurement of a particular value, a tolerance caused by manufacturing, assembly, and use associated with the particular value, and the like. Such a relative term should also be considered as disclosing the range defined by the absolute values of the two endpoints. The relative term may refer to that an indicated value is added or reduced by a certain percentage (such as 1%, 5%, 10%, or more). A value not modified by the relative term should also be disclosed as a particular value with a tolerance. In addition, when expressing a relative angular position relationship (for example, basically parallel or basically perpendicular), "basically" may refer to plus or minus a certain degree (such as 1 degree, 5 degrees, 10 degrees, or more) based on an indicated angle.

In the present application, it is to be understood by those of ordinary skill in the art that a function implemented by an assembly may be implemented by one assembly, multiple assemblies, one part, or multiple parts. Similarly, a function implemented by a part may be implemented by one part, one assembly, or a combination of parts.

In the present application, the terms "up", "down", "left", "right", "front", and "rear", and other directional words are described based on the orientation or positional relationship shown in the drawings and should not be understood as limitations to the examples of the present application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It is also to be understood that the directional words such as the upper side, lower side, left side, right side, front side, and rear side not only represent perfect orientations but can also be understood as lateral orientations. For example, the lower side may include directly below, bottom left, bottom right, front bottom, and rear bottom.

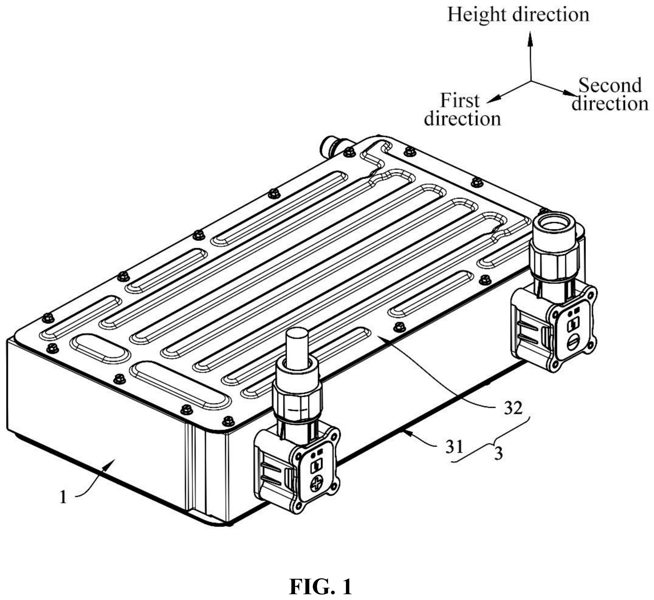

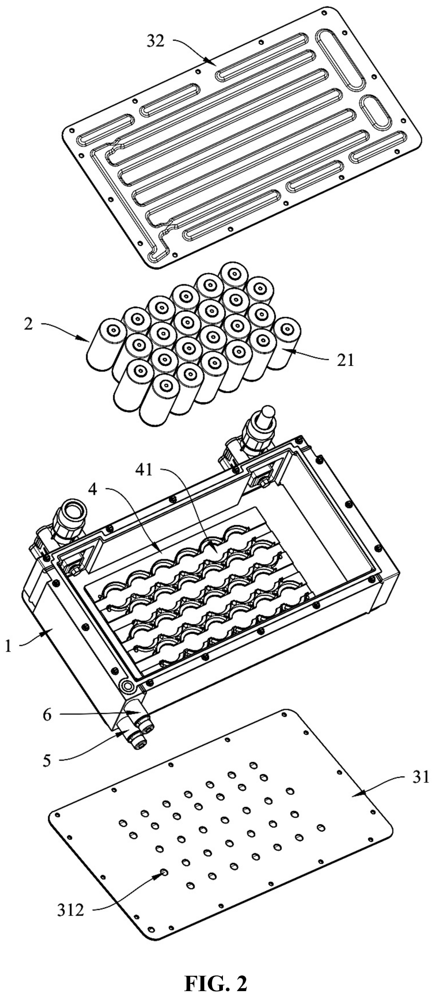

FIG. 1 is a structure diagram of a battery pack according to embodiments of the present application. FIG. 2 is an exploded view of the battery pack of FIG. 1. As shown in FIGS. 1 and 2, the battery pack provided in the present application includes a battery box 1, a battery assembly 2, and a cell bracket 4. The battery assembly 2 and the cell bracket 4 are mounted in the battery box 1. The battery assembly 2 includes a plurality of cells 21 arranged in a set manner. The cell bracket 4 is configured to support and limit the cells 21 to guarantee the stability of the mounting of the battery assembly 2, thereby improving the safety of the battery pack.

In FIG. 2, a cell 21 is a cylindrical cell. Multiple cylindrical cells are arranged in a set manner to form the battery assembly 2. Accordingly, the cell bracket 4 includes cell limiting grooves 41 matching the cylindrical cells. A cell limiting groove 41 is circular. The bottom of a cell 21 is accommodated in a respective battery cell limiting groove 41 to implement the limiting mounting of the cell 21. It is to be understood that a cell 21 may also be a square-case cell or a battery cell of another shape, which is not limited here.

For ease of description, the thickness direction of the battery box 1 is marked as a height direction, the length direction of the battery box 1 is marked as a first direction, and the width direction of the battery box 1 is marked as a second direction. It is to be understood that the length direction of the battery box 1 and the length direction of the cell bracket 4 are the same direction and that the width direction of the battery box 1 and the width direction of the cell bracket 4 are the same direction.

The battery pack further includes a liquid-cooled assembly 3. The liquid-cooled assembly 3 is configured to thermally control the battery assembly 2 in the battery box 1 to guarantee the temperature consistency of the cells 21 in the battery assembly 2, thereby improving the safety and stability of the battery pack.

The liquid-cooled assembly 3 includes liquid-cooled plates. Liquid holes are disposed on the liquid-cooled plates and include liquid inlet holes and liquid outlet holes. The liquid-cooled plates may include a first liquid-cooled plate 31 and a second liquid-cooled plate 32. The first liquid-cooled plate 31 and the second liquid-cooled plate 32 are mounted on the bottom of the battery box 1 and the top of the battery box 1 respectively, and the first liquid-cooled plate 31 and the second liquid-cooled plate 32 match the battery box 1 to form an accommodation cavity configured to accommodate the battery assembly 2 and the cell bracket 4. Liquid holes of the first liquid-cooled plate 31 include a first liquid inlet hole 311 and a first liquid outlet hole 312. Liquid holes of the second liquid-cooled plate 32 include a second liquid inlet hole 321 and a second liquid outlet hole 322. In the liquid cooling process, a coolant enters the accommodation cavity through the first liquid-cooled plate 31 and immerses the battery assembly 2 to implement the temperature adjustment of the battery assembly 2. After the accommodation cavity is filled with the coolant, the coolant can be discharged through the second liquid-cooled plate 32 and then enter the accommodation cavity through the first liquid-cooled plate 31 again after refrigeration, thereby implementing the recycling of the coolant.

In FIG. 2, the bottom of the battery box 1 and the top of the battery box 1 are open. The first liquid-cooled plate 31 is secured on the bottom of the battery box 1 and covers an opening on the bottom of the battery box 1. That is, the first liquid-cooled plate 31 serves not only as a part of the liquid cooling cycle of the liquid-cooled assembly 3 but also as a bottom plate structure of the battery box 1. Such a design can not only reduce the material cost of the battery pack but also reduce the weight of the entire battery pack and improve the energy density of the battery pack. Similarly, the second liquid-cooled plate 32 is secured on the top of the battery box 1 and covers an opening on the top of the battery box 1. That is, the second liquid-cooled plate 32 serves not only as a part of the liquid cooling cycle of the liquid-cooled assembly 3 but also as a top plate structure of the battery box 1. Such a design can not only reduce the material cost of the battery pack but also reduce the weight of the entire battery pack and improve the energy density of the battery pack. It is to be understood that in other embodiments, the battery box 1 may also have an independent bottom plate different from the first liquid-cooled plate 31 and may also have an independent top cover different from the second liquid-cooled plate 32.

In order to guarantee the sealing property of the connection between the first liquid-cooled plate 31 and the battery box 1, a sealant is provided at the connection between the battery box 1 and the first liquid-cooled plate 31. For example, a bottom end surface of the battery box 1 may have an annular recess portion that accommodates the sealant, thereby implementing the limit of the sealant and guaranteeing the effect of sealing. Similarly, in order to guarantee the sealing property of the connection between the second liquid-cooled plate 32 and the battery box 1, a sealant is provided at the connection between the battery box 1 and the second liquid-cooled plate 32. For example, a top end surface of the battery box 1 may have an annular recess portion that accommodates the sealant, thereby implementing the limit of the sealant and guaranteeing the effect of sealing.

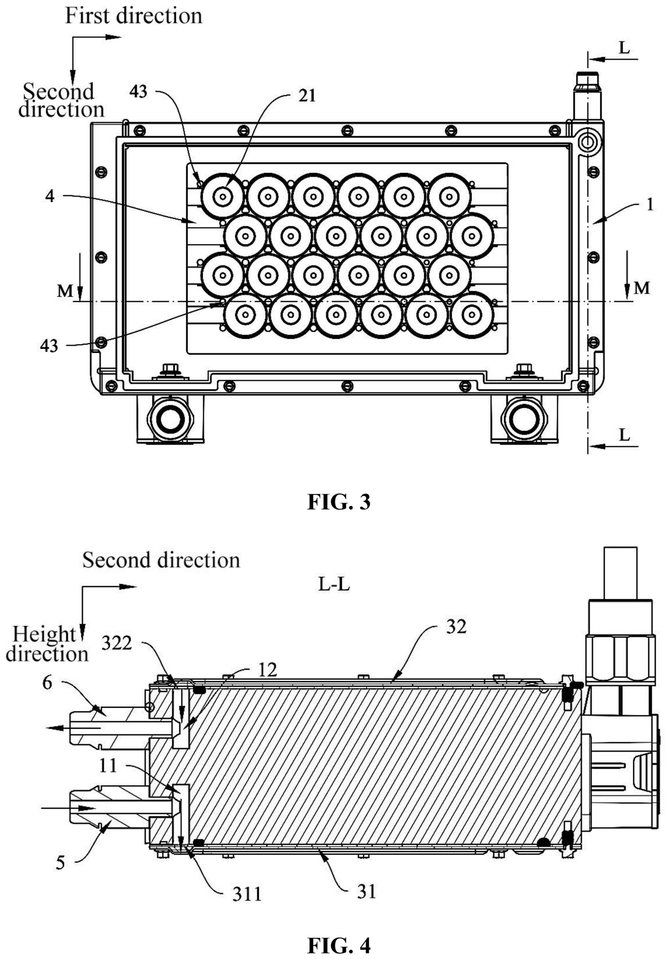

FIG. 3 is a top view of the battery pack with the second liquid-cooled plate 32 removed according to embodiments of the present application. FIG. 4 is a section view taken along L-L of FIG. 3. As shown in FIGS. 3 and 4 and in combination with FIG. 2, a side wall plate of the battery box 1 has a liquid inlet transition hole 11 and a liquid outlet transition hole 12. The first liquid-cooled plate 31 has the first liquid inlet hole 311 communicating with the liquid inlet transition hole 11. The second liquid-cooled plate 32 has the second liquid outlet hole 322 communicating with the liquid outlet transition hole 12. Transition holes through which the first liquid-cooled plate 31 communicates with the second liquid-cooled plate 32 are integrated on the side wall plate of the battery box 1, simplifying the liquid inlet structure of the first liquid-cooled plate 31 and the liquid outlet structure of the second liquid-cooled plate 32 and reducing the processing difficulty of the first liquid-cooled plate 31 and the second liquid-cooled plate 32.

Additionally, the liquid-cooled assembly 3 further includes a liquid inlet joint 5 and a liquid outlet joint 5. The liquid inlet joint 5 is mounted on the battery box 1 and communicates with the liquid inlet transition hole 11. The liquid outlet joint 6 is mounted on the battery box 1 and communicates with the liquid outlet transition hole 12. The liquid-cooled assembly 3 further includes a refrigeration device. The refrigeration device is placed outside the battery box 1. A liquid outlet end of the refrigeration device is connected to the liquid inlet joint 5. A liquid inlet end of the refrigeration device is connected to the liquid outlet joint 6. That is, after the coolant passes through the refrigeration device, the coolant first enters the first liquid-cooled plate 31 through the liquid inlet joint 5 and then enters the accommodation cavity through the first liquid-cooled plate 31. After the accommodation cavity is filled with the coolant, the coolant enters the second liquid-cooled plate 32 and finally flows back to the refrigeration device through the liquid outlet joint 6, thereby implementing the recycling of the coolant and improving the cooling effect of the coolant on the battery assembly 2.

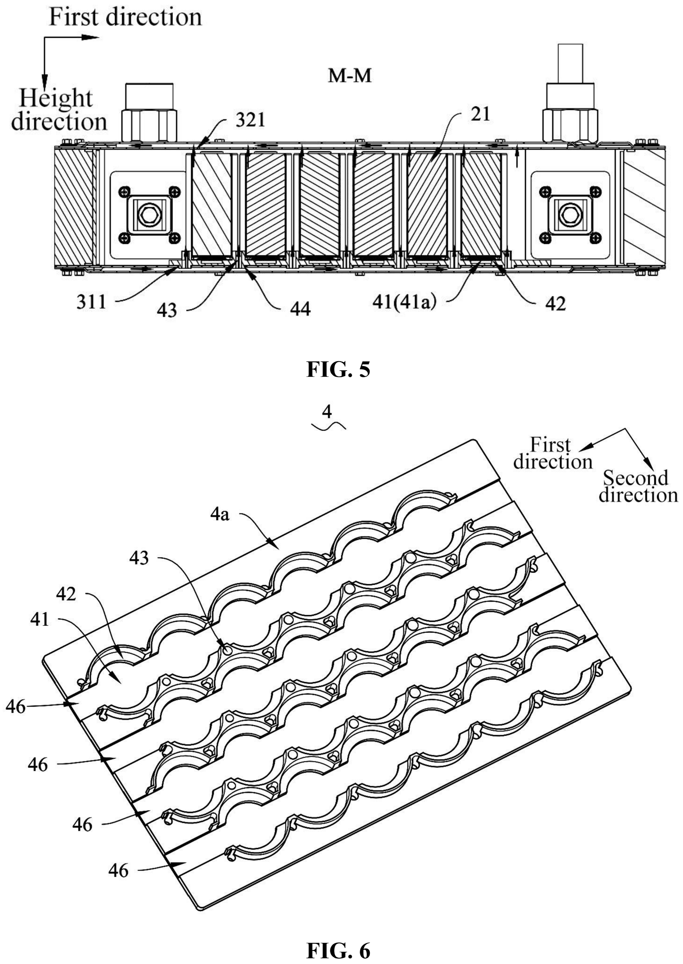

FIG. 5 is a section view taken along M-M of FIG. 3. As shown in FIG. 5 and in combination with FIGS. 4 and 2, a surface of the first liquid-cooled plate 31 facing the battery assembly 2 has a plurality of first liquid outlet holes 312, and a surface of the second liquid-cooled plate 32 facing the battery assembly 2 has a plurality of second liquid inlet holes 321. The coolant in the first liquid-cooled plate 31 can flow into the accommodation cavity through the first liquid outlet holes 312. In the liquid cooling process, the coolant enters the first liquid-cooled plate 31 from the liquid inlet joint 5 and through the liquid inlet transition hole 11 and the first liquid inlet hole 311 sequentially and then flows into the accommodation cavity from the first liquid outlet holes 312 and along a flow path in the first liquid-cooled plate 31. After the battery assembly 2 is immersed by the coolant in the accommodation cavity and the coolant flows to a lower surface of the second liquid-cooled plate 32, the coolant may enter the second liquid-cooled plate 32 from the second liquid inlet holes 321, then flow to the liquid outlet transition hole 12 from the second liquid outlet hole 322 and along a flow path in the second liquid-cooled plate 32, and finally flow out from the liquid outlet joint 6.

It is to be understood that one cell bracket 4 is provided in this embodiment. One cell bracket 4 is located below the battery assembly 2 and above the first liquid-cooled plate 31. In other embodiments, two cell brackets 4 may be provided. One of the cell brackets 4 is located between the battery assembly 2 and the first liquid-cooled plate 31, and the other of the cell brackets 4 is located between the battery assembly 2 and the second liquid-cooled plate 32.

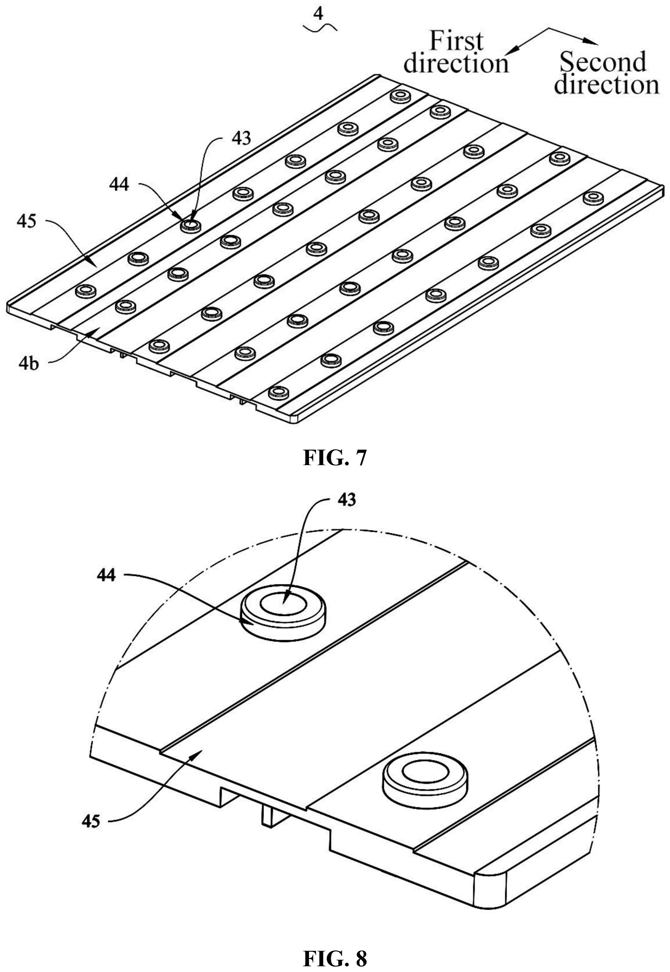

FIG. 6 is a structure diagram showing a cell bracket 4 in one direction according to embodiments of the present application. FIG. 7 is a structure diagram showing a cell bracket 4 in the other direction according to embodiments of the present application. As shown in FIGS. 6 and 7 and in combination with FIG. 5, a first surface 4a of the cell bracket 4 has a plurality of cell limiting grooves 41. A protrusion block 42 for supporting a cell 21 is disposed in each cell limiting groove 41. The cell 21 has end surfaces, that is, a bottom surface and a top surface. When an end surface of the cell 211 abuts against the protrusion block 42, a flow gap 41a exists between a groove bottom surface of the respective cell limiting groove 41 and the end surface of the cell 21. For example, when the cell bracket 4 is located on the bottom of the battery assembly 2, the bottom surface of the cell 21 abuts against the protrusion block 42, and a flow gap 41a exists between the groove bottom surface of the cell limiting groove 41 and the bottom surface of the cell 21. When the cell bracket 4 is located on the top of the battery assembly 2, the top surface of the cell 21 abuts against the protrusion block 42, and a flow gap 41a exists between the groove bottom surface of the cell limiting groove 41 and the top surface of the cell 21.

The cell bracket 4 further includes communication holes 43 penetrating the first surface 4a of the cell bracket 4 and a second surface 4b of the cell bracket 4. The communication holes 43 communicate with the first liquid outlet holes 312 in a one-to-one manner. Moreover, the communication holes 43 is in fluid communication with the flow gap 41a in a state where the cells 21 are accommodated in the cell limiting grooves 41 so as to guarantee that the coolant can flow into the cell limiting grooves 41, thereby implementing liquid cooling and heat dissipation of the part of the cells 21 accommodated in the cell limiting grooves 41, guaranteeing the overall temperature consistency of the cells 21, and improving the stability of the cells 21.

When the number of cell brackets 4 in this embodiment is two, one of the cell brackets 4 is located between the battery assembly 2 and the first liquid-cooled plate 31, and the other of the cell brackets 4 is located between the battery assembly 2 and the second liquid-cooled plate 32. Communication holes 43 on the cell brackets 4 may communicate with the second liquid inlet holes 321 on the second liquid-cooled plate 32. For the matching relationship between the cell brackets 4 and the second liquid-cooled plate 32, reference may be made to the matching relationship between the first liquid-cooled plate 31 and the cell bracket 4, which is not repeated here.

In other embodiment, when two cell brackets 4 are provided, one of the cell brackets 4 is located on the bottom of the cells 21 and above the first liquid-cooled plate 31, and the other of the cell brackets 4 is located on the top of the cells 21 and below the second liquid-cooled plate 32. A surface of the cell bracket 4 located on the top of the cells 21 and below the second liquid-cooled plate 32 facing the cells 21 (that is, the first surface 4a) has a plurality of cell limiting grooves 41. Each cell limiting groove 41 has a protrusion block 42. When a top surface of a cell 21 abuts against a respective protrusion block 42, a flow gap 41a exists between a groove bottom surface of a respective cell limiting groove 41 and the top surface of the cell 21. The flow gap is used for enabling the coolant to flow to the top surface of the cell 21, thereby implementing the temperature adjustment of the top surface of the cell 21. In this embodiment, a surface (that is, the second surface 4b) of the cell bracket 4 facing the first liquid-cooled plate 31 has bosses 44. A boss 44 is inserted into a respective first liquid outlet hole 312, and a respective communication hole 43 penetrates the boss 44. The arrangement in which the boss 44 is inserted into the first liquid outlet hole 312 can not only implement the positioning and assembly between the cell brackets 4 and the first liquid-cooled plate 31 but also guarantee that the coolant flowing out of the first liquid outlet hole 312 can directly and smoothly flow to the battery assembly 2 through the communication hole 43.

In FIG. 7, the shape of the boss 44 is cylindrical. The center line of the communication hole 43 is perpendicular to the cell bracket 4. The communication hole 43 penetrates the boss 44. In order to facilitate the insertion and matching between the boss 44 and the first liquid outlet hole 312, the shape of the first liquid outlet hole 312 is also circular (see FIG. 2). Moreover, the depth of the boss 44 extending into the first liquid outlet hole 312 is less than the depth of the flow path in the first liquid-cooled plate 31 so as to guarantee that the coolant in the flow path can smoothly flow into the communication hole 43.

The communication hole 43 is displaced from the cell limiting groove 41 on the first surface 4a of the cell bracket 4. The communication hole 43 avoids the cell 21 in the battery assembly 2 to prevent the coolant from being subject to the resistance from the cell 21 after the coolant flows out from the communication hole 43, thereby increasing the flow rate of the coolant. In this embodiment, the battery assembly 2 includes multiple rows of cell groups arranged in the second direction. Two adjacent cell groups are displaced from each other. Moreover, each cell group includes multiple cells 21 arranged in the first direction. A gap between two adjacent cells 21 in the same row of cell groups is smaller than a gap between two adjacent cells 21 in two rows of cell groups. Therefore, a communication hole 43 is positioned between two adjacent rows of cell groups to provide sufficient space for the circulation of the coolant. Moreover, the coolant can flow upward along an outer wall of a cell 21, guaranteeing the stability of the flow of the coolant and reducing the resistance of the coolant. Similarly, the cell limiting grooves 41 are arranged as follows: multiple cell limiting grooves 41 arranged sequentially in the first direction form a cell limiting groove group, multiple cell limiting groove groups are arranged in the second direction, and multiple cell limiting grooves 41 in two adjacent cell limiting groove groups are displaced from each other to better support the cells 21.

A surface of the cell bracket 4 facing the battery assembly 2 (that is, the first surface 4a) also has penetrating grooves 46 extending in the first direction. The penetrating grooves 46 penetrate the cell bracket 4 in the first direction. The penetrating grooves 46 are spaced apart in the second direction. Moreover, each penetrating groove 46 is configured to communicate with cell limiting grooves 41 arranged sequentially in the first direction. The design of the penetrating grooves 46 can not only facilitate the circulation of the coolant between the bottom of multiple cells 21 but also serve as explosion-proof pressure-relief channels for the cells 21. When a cell 21 is thermally runaway, a high-pressure gas or a jet generated at an explosion-proof valve of the cell 21 can be quickly discharged from a respective penetrating groove 46 to the outside of the cell bracket 4 to improve the safety of the battery pack.

Each cell limiting groove 41 has two symmetrical protrusion blocks 42, and two symmetrical protrusion blocks 42 are spaced apart. A gap between two protrusion blocks 42 in each cell limiting groove 41 communicates with a respective penetrating groove 46 to reduce the resistance of the protrusion blocks 42 to the coolant and guarantee the smooth flow of the coolant.

In FIG. 6, each protrusion block 42 in each cell limiting groove 41 is an arc-shaped protrusion block, and the centers of two protrusion blocks 42 in each cell limiting groove 41 coincide with each other. Such an arc-shaped protrusion block is adapted to the shape structure of a respective cylindrical cell 21 so as to better support the cylindrical cell 21 and guarantee the stability of the cell 21. Additionally, structural adhesive exists between the bottom of the cell 21 and the protrusion block 42. The arrangement of the structural adhesive can improve the stability of the mounting of the cell 21.

FIG. 8 is a partial structure view of the cell bracket 4 of FIG. 7. As shown in FIG. 8 and in combination with FIG. 7, a surface of the cell bracket 4 facing the first liquid-cooled plate 31 also has recesses 45. The recesses 45 are displaced from the bosses 44. A recess 45 is configured to accommodate the structural adhesive configured to strengthen the connection between the cell bracket 4 and the first liquid-cooled plate 31. Additionally, a liquid inlet end of a communication hole 43 is disposed on a respective boss 44. The boss 44 is higher than a respective recess 45 of the cell bracket 4, thereby effectively preventing the structural adhesive from overflowing into the liquid inlet end of the communication hole 43 and thus preventing the structural adhesive from blocking the communication hole 43.

In this embodiment, a plurality of recesses 45 are provided. All the recesses 45 penetrate the cell bracket 4 in the length direction of the cell bracket 4 (that is, the first direction). In other embodiments, all the recesses 45 penetrate the cell bracket 4 in the width direction of the cell bracket 4 (that is, the second direction), which is not limited here.

## Claims

1. A cell bracket for an immersion-type liquid-cooled battery pack, wherein a first surface (4a) of the cell bracket comprises a plurality of cell limiting grooves (41) configured to accommodate cells (21) of the immersion-type liquid-cooled battery pack;
a protrusion block (42) for supporting a cell (21) of the cells (21) is disposed in a respective cell limiting groove (41) of the plurality of cell limiting grooves (41), and in a state where an end surface of the cell (21) abuts against the protrusion block (42), a flow gap (41a) exists between a groove bottom surface of the respective cell limiting groove (41) and the end surface of the cell (21); and
the cell bracket further comprises a second surface (4b) opposite to the first surface (4a), a communication hole (43) penetrating the first surface (4a) and the second surface (4b) is disposed on the cell bracket, the communication hole (43) is configured to communicate with a liquid hole of a liquid-cooled plate of the immersion-type liquid-cooled battery pack, and the communication hole (43) is in fluid communication with the flow gap (41a) in a state where the cell (21) is accommodated in the respective cell limiting groove (41).

2. The cell bracket according to claim 1, wherein the second surface (4b) of the cell bracket comprises a boss (44) configured to be inserted into the liquid hole, and the communication hole (43) penetrates the boss (44).

3. The cell bracket according to claim 2, wherein the second surface (4b) of the cell bracket further comprises a recess (45) configured to accommodate structural adhesive, and the recess (45) is displaced from the boss (44).

4. The cell bracket according to claim 3, wherein a plurality of recesses (45) are provided, the plurality of recesses (45) penetrate the cell bracket in a first direction, or the plurality of recesses (45) penetrate the cell bracket in a second direction, and the first direction intersects the second direction.

5. The cell bracket according to claim 1, wherein the communication hole (43) is displaced from the respective cell limiting groove (41) on the first surface (4a) of the cell bracket.

6. The cell bracket according to any one of claims 1 to 5, wherein the plurality of cell limiting grooves (41) are arranged in the following manners: multiple cell limiting grooves (41) arranged sequentially in a first direction form a cell limiting groove group, multiple cell limiting groove groups are arranged in a second direction, and multiple cell limiting grooves (41) in two adjacent ones of the multiple cell limiting groove groups are displaced from each other.

7. The cell bracket according to claim 6, wherein the first surface (4a) of the cell bracket further comprises a plurality of penetrating grooves (46), each penetrating groove (46) of the plurality of penetrating grooves (46) penetrates the cell bracket in the first direction, the plurality of penetrating grooves (46) are spaced apart in the second direction, and the each penetrating groove (46) is configured to communicate with cell limiting grooves (41) arranged sequentially in the first direction.

8. The cell bracket according to claim 7, wherein each cell limiting groove (41) of the plurality of cell limiting grooves (41) has two symmetrical protrusion blocks (42), the two symmetrical protrusion blocks (42) are spaced apart, and a gap between the two symmetrical protrusion blocks (42) in the each cell limiting groove (41) communicates with a respective one of the plurality of penetrating grooves (46).

9. An immersion-type liquid-cooled battery pack, comprising a battery assembly (2), a liquid-cooled plate, and the cell bracket according to any one of claims 1 to 8, wherein the cell bracket is disposed between the battery assembly (2) and the liquid-cooled plate, a first surface (4a) of the cell bracket faces the battery assembly (2), and a second surface (4b) of the cell bracket faces the liquid-cooled plate.

10. The immersion-type liquid-cooled battery pack according to claim 9, further comprising a battery box (1), wherein battery box (1) has openings at both ends in a height direction of the battery box (1), two liquid-cooled plates are provided, one liquid-cooled plate of the two liquid-cooled plates is secured on a top of the battery box (1) and covers an opening corresponding to the one liquid-cooled plate, and the other one liquid-cooled plate of the two liquid-cooled plates is secured on a bottom of the battery box (1) and covers an opening corresponding to the other one liquid-cooled plate.
